(19) Europäisches Patentamt
European Patent Office
Office européen des brevets

(11) **EP 4 428 831 A1**

(12) **EUROPEAN PATENT APPLICATION**
published in accordance with Art. 153(4) EPC

(43) Date of publication:
**11.09.2024 Bulletin 2024/37**

(21) Application number: **23883055.8**

(22) Date of filing: **24.10.2023**

(51) International Patent Classification (IPC):
*G06V 10/774* (2022.01)   *G06V 10/764* (2022.01)
*G06V 10/82* (2022.01)   *G06V 20/40* (2022.01)
*G06N 3/09* (2023.01)   *G06N 3/0475* (2023.01)
*G01N 33/44* (2006.01)

(52) Cooperative Patent Classification (CPC):
**G01N 33/44; G06N 3/0475; G06N 3/09;
G06V 10/764; G06V 10/774; G06V 10/82;
G06V 20/40**

(86) International application number:
**PCT/KR2023/016554**

(87) International publication number:
**WO 2024/090949 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022   KR 20220141535
23.10.2023   KR 20230142281**

(71) Applicant: **LG Chem, Ltd.**
**Yeongdeungpo-gu
Seoul 07336 (KR)**

(72) Inventors:
• **KIM, Kyeong Rak**
  **Daejeon 34122 (KR)**
• **RYU, Ji Hye**
  **Daejeon 34122 (KR)**
• **PARK, Je Seob**
  **Daejeon 34122 (KR)**
• **KANG, Ho Sung**
  **Daejeon 34122 (KR)**
• **SHIN, Min Wha**
  **Daejeon 34122 (KR)**

(74) Representative: **Plasseraud IP**
**104 Rue de Richelieu
CS92104
75080 Paris Cedex 02 (FR)**

(54) **METHOD FOR CALCULATING ABSORPTION RATE OF SUPER ABSORBENT POLYMER ON BASIS OF IMAGE CLASSIFICATION ALGORITHM**

(57)   The present invention provides a method and system for calculating an absorbing speed of a predetermined absorbent material from video data obtained by photographing a video of the absorbent material absorbing water. According to the present invention, absorption video data is separated into each frame image data, an artificial neural network model is used to determine whether each frame of image data is an absorption-in-progress image or an absorption-completion image, and an absorption start time point and an absorption end time point are detected, thereby calculating the absorption speed of the absorbent material.

FIG. 1

EP 4 428 831 A1

**Description**

## TECHNICAL FIELD

The present invention relates to a method for calculating an absorbing speed of a super absorbent material.

## BACKGROUND ART

Conventionally, an absorbent material has been used by calculating the absorbing speed thereof and giving the absorbent material a use that matches its absorbing speed. In the past, in order to calculate this absorbing speed, a method for measuring the absorption time manually using a timer after inserting a sample absorbent material into a place of use was used.

However, this method was inefficient because researchers had to measure the absorption time manually.

Patent document 1 discloses a method for measuring the change in mass of the absorbent material to roughly determine the time required for an amount of absorbed liquid of the sample to reach the maximum absorbed amount. However, this method has the problem that it can be applied only when the maximum absorption amount and penetration speed coefficient of the sample are known.

Related prior art includes the following literature.

Patent Document 1: Japanese unexamined patent application publication No. 2020-051997

## DISCLOSURE OF THE INVENTION

### TECHNICAL PROBLEM

The present invention, unlike conventional methods, is intended to provide a method and system for calculating a degree of absorption of an absorbent material from an image for each frame of absorption video data of the absorbent material.

### TECHNICAL SOLUTION

According to an aspect of the present invention, there is provided a method for generating an artificial neural network model for calculating an absorbing speed of an absorbent material, the method including a step of preparing training data consisting of image data of a predetermined absorbent material and classification data labeled by dividing a corresponding image into whether it is an absorption-in-progress image or an absorption-completion image, a step of constructing an artificial neural network that receives predetermined image data and classifies an input image with a predetermined label, and a machine learning step of training the artificial neural network by inputting the training data into the artificial neural network and updating parameters constituting the artificial neural network.

In this case, the image data of the absorbent material is acquired through a video data acquisition step of acquiring absorption video data for a plurality of absorbent materials, and a frame image data acquisition step of acquiring each frame image data constituting the video data. In addition, the absorption video data is video data in which a process of water being absorbed and hardened when a predetermined amount of the absorbent material is added while putting a predetermined amount of water in a container and stirring the water.

According to another aspect of the present invention, there is provided a method for calculating an absorbing speed of an absorbent material including an absorbent material video data acquisition step of putting an absorbent material and acquiring video data of the absorbent material for a predetermined period of time, a frame image data acquisition step of acquiring frame image data by separating the video data into each frame image data, a frame image classification step of classifying the frame image by inputting the frame image data into an artificial neural network model, and an absorbing speed calculation step of extracting an absorption end frame and an absorption start frame from the classified frame images and calculating an absorbing speed using the absorption end frame and the absorption start frame.

In this case, in the absorbing speed calculation step, the absorbing speed can be calculated by (Equation 1) below. (Equation 1) absorbing speed = (absorption end frame number - absorption start frame number)/fps of video

According to still another aspect of the present invention, there is provided a system for calculating an absorbing speed of an absorbent material including a video data acquisition unit that acquires absorption video data of the absorbent material, frame image data acquisition unit that acquires frame image data by separating the absorption video data into each frame image data constituting video data, and an absorbing speed arithmetic unit that calculates an absorbing speed of the absorbent material by calculating an absorption start time and an absorption completion time from the frame image data.

The present invention further includes a frame image determination unit that receives each frame image data acquired by the frame image data acquisition unit in frame order and distinguishes and determines whether it is an absorption-in-progress image in which the absorbent material is absorbing water, or an absorption-completion image in which water absorption has been completed, and the absorption speed arithmetic unit calculates an absorption start time point from a frame number (start frame number) of an image that the frame image determination unit first determines to be an absorption-in-progress image, and calculates an absorption completion time point from the frame number of an image that the frame image determination unit first determines to be an absorption-completion image;

The frame image determination unit is configured to include an artificial neural network unit trained in advance to receive each input frame image data, distinguish and determine the input frame image data as an absorption-in-progress image or an absorption-completion image, and output the determination result, and the artificial neural network unit receives sample frame image data obtained by separating the absorption sample image data of multiple sample absorbent materials into each sample frame image data and data labeled as being in a state in which water is being absorbed and in a state in which water absorption has been completed, and is trained so as to match the labeled data to each sample frame image data.

## ADVANTAGEOUS EFFECTS

According to the present invention, compared to the conventional method for measuring the absorbing speed of the absorbent material manually using a timer, an effect of measuring the absorbing speed more accurately by applying an image classification algorithm to various absorbent materials through photographing of absorption video can be achieved.

## BRIEF DESCRIPTION OF THE DRAWINGS

The following drawings attached to this specification illustrate preferred embodiments of the present invention, and together with the detailed description of the invention described above serve to further understand the technical idea of the present invention. Therefore, the present invention should not be construed as limited to only the matters described in such drawings.

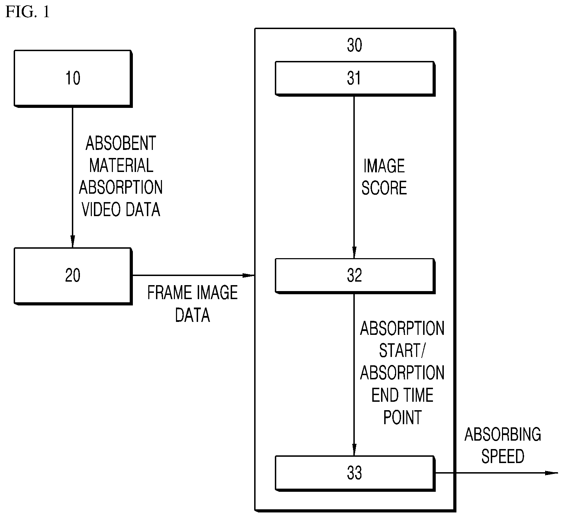

FIG. 1 is a diagram showing an outline of a system for calculating an absorbing speed of an absorbent material according to the present invention.
FIG. 2 is a diagram showing an example of an image for each frame of an absorption video according to an embodiment of the present invention.

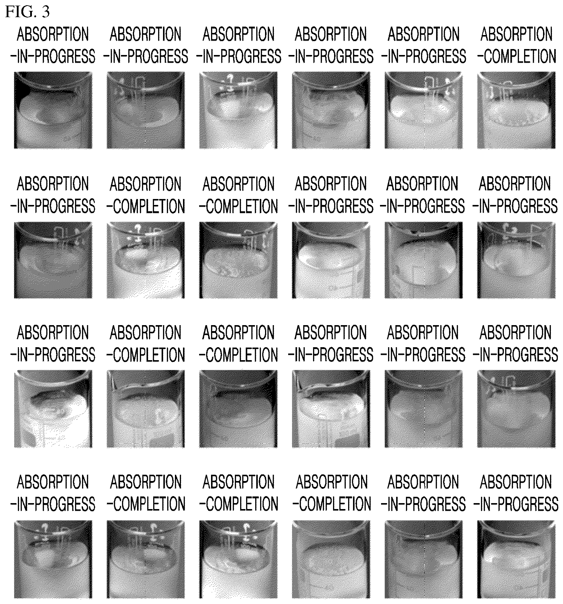

FIG. 3 is a diagram that actually shows the frame image of video data photographed in order to prepare training data.
FIG. 4 is a diagram showing a score calculation output per frame when video data is input to a prediction model trained according to the present invention.

## MODE FOR CARRYING OUT THE INVENTION

The present invention relates to a method and system for calculating an absorbing speed of a super absorbent polymer using an image classification algorithm. As the image classification algorithm used in the present invention a typical convolutional neural network (CNN) can be used, and in addition, image classification models known before the filing date of the present invention can be applied. It should be noted that the technical feature of the present invention is not in the image classification model itself, but in calculating the absorbing speed from an absorption video of the super absorbent polymer using the image classification model.

1. System for calculating absorbing speed of absorbent material (super absorbent polymer) according to the present invention

1.1. Absorption video data acquisition unit 10

The present invention includes a video data acquisition unit that acquires absorption video data of the absorbent material. The video data acquisition unit performs a video data acquisition step in a method for calculating the absorbing speed of the absorbent material according to the present invention.

Absorption video data of the absorbent material refers to video data photographed at a predetermined number of frames per second (fps) of an absorption process of a predetermined absorbent material under predetermined conditions. The video data acquisition unit is a component that receives the video data, and can be configured to include a typical video camera.

<Example of acquisition of absorption video data of absorbent material>

An example of acquiring absorption video data of the absorbent material is shown. In the present invention, a 100 mL beaker is filled with 50 mL of 0.9 wt% saline water, and while the saline water is rotated through magnetic stirring at 600 rpm and the entire process of the saline water being absorbed and hardened when 2 g of super absorbent polymer (absorbent material) is added was photographed to acquire video data. In this case, the video was photographed with a video camera so that a surface inside the beaker was visible at an angle between 30 and 60 degrees as captured in the video.

1.2. Frame image data acquisition unit 20

The frame image data acquisition unit is a component that separates the video data (absorption video data) acquired or input from the video data acquisition unit into image data in frame units. It is well known to those skilled in the art that a task of separating predetermined video data into each frame image data can be easily implemented through ordinary image processing software or image processing algorithms.
The frame image data acquisition unit performs a frame image data acquisition procedure in a method for generating the artificial neural network model and method for calculating the absorbing speed of the absorbent material of the present invention.

1.3 Absorption speed arithmetic unit 30

The absorption speed arithmetic unit is configured to include an artificial neural network model 31 that receives the acquired frame image data, classifies the frame image, and outputs a score, an absorption progress determination unit 32 that calculates an absorption start time point and an absorption completion time point from an output of the artificial neural network model, and an absorbing speed arithmetic unit 33 that calculates the absorbing speed from the absorption start time point and the absorption completion time point.

(1) Image determination unit: artificial neural network model 31

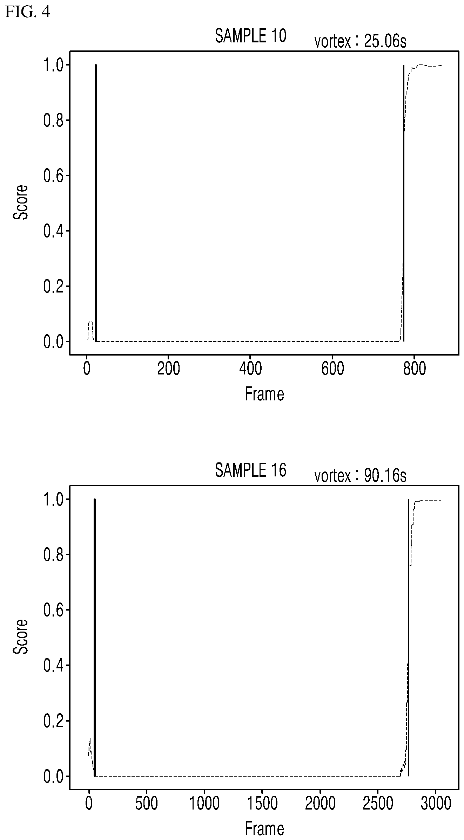

The present invention includes a frame image determination unit that receives each frame image data acquired by the frame image data acquisition unit in frame order and distinguishes and determines whether it is an absorption-in-progress image in which the absorbent material is absorbing water, or an absorption-completion image in which water absorption has been completed.
The image determination unit 31 may be configured with an artificial neural network model. The artificial neural network model of the present invention is an example of an image classification algorithm used for calculating the absorbing speed of the super absorbent polymer in the present invention described above. As the artificial neural network model, a conventional convolutional neural network (CNN) can be used, and in addition, an image classification model known before the filing date of the present invention can be applied.
The artificial neural network that constitutes the artificial neural network model of the present invention is subjected to machine learning according to a learning procedure described later, and receives each frame image data constituting the absorption video data of the absorbent material described above, distinguishes whether the corresponding image is the absorption-in-progress image or the absorption-completion image, and outputs the probability that the image is the absorption-in-progress image and the probability that the image is the absorption-completion image as scores. The score output for each frame image is a value between 0 and 1. An example of the score for each frame image output by the artificial neural network model of the present invention trained according to the learning procedure described later is shown in FIG. 4.

(2) Training of artificial neural networks

The artificial neural network model 31 of the present invention includes an artificial neural network that is subjected to machine learning according to the procedure below. The CNN is basically used as an artificial neural network.
First, a 100 mL beaker is filled with 50 mL of 0.9 wt% saline water, and while the saline water is rotated through magnetic stirring at 600 rpm, and the entire process of the saline water being absorbed and hardened when 2 g of super absorbent polymer (absorbent material) is added is photographed to acquire video data. In this case, the video was photographed with a video camera so that a surface inside the beaker was visible at an angle between 30 and 60 degrees as captured in the video.
Next, the video data is separated into each frame image data to acquired frame image data.
Such video data and frame image data for training data can be acquired using the video data acquisition unit 10 and the frame image data acquisition unit 20 described above.

Next, labeled data obtained by labeling whether the frame image is the absorption-in-progress image or the absorption-completion image is merged with the frame image data. Labeled data may not be merged with frame image data and may also be handled independently by frame number.

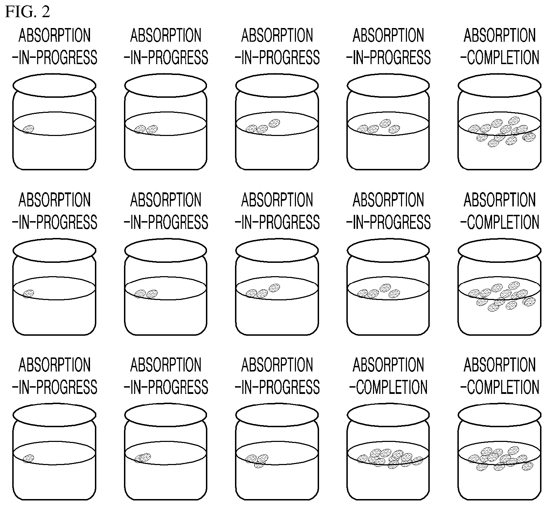

FIG. 2 shows an example in which each video data for preparing training data is separated into frame image data and labeled.

Next, the artificial neural network that receives image data and classifies the input image with a predetermined label is constructed. The artificial neural network may have the structure of a typical CNN, and a data structure of the CNN as a data processing structure implemented on a computer is well known to those skilled in the art.

Next, machine learning is conducted by inputting the training data described above into the constructed artificial neural network, and training of the artificial neural network is completed. The artificial neural network model 31 of the present invention including the artificial neural network of which training is completed by updating the parameters of each layer constituting the artificial neural network in the machine learning step receives the acquired frame image data from arbitrary absorbent material video data and outputs a score, which is a discriminating value of whether the corresponding image corresponds to the absorption-in-progress image or the absorption-completion image.

An example of score output values for absorption video data and frame image data of absorbents A (sample 10) and B (sample 16) is shown in FIG. 4. It means that the closer the score is to 0, the more absorption is in progress, and the closer the score is to 1, the more absorption is finished.

(3) Absorption progress determination unit 32

The absorption progress determination unit 32 calculates the absorption start time point and absorption completion time point based on the score of each frame image data output by the artificial neural network model 31.

In the example of FIG. 4, a frame whose score is stabilized close to zero is selected as a frame at the absorption start time point, and a frame whose score increases by 0.5 or more is selected as a frame at the absorption end time point.

(4) Absorption speed arithmetic unit 33

It is configured to include the absorbing speed arithmetic unit 33 that calculates the absorbing speed from the absorption start time point and the absorption completion time point. The absorbing speed arithmetic unit 33 calculates the absorbing speed according to Equation 1 below from the calculated absorption start time point and absorption end time point.

(Equation 1)

$$\text{Absorbing speed} = \text{absorption end time point} - \text{absorption start time point}$$

The absorbing speed may be calculated from the following Equation 2.

Absorbing speed = (absorption end frame number - absorption start frame number)/fps of video data

2. Method for calculating absorbing speed of absorbent material (super absorbent polymer) according to the present invention

The method for calculating the absorbing speed of the absorbent material according to the present invention is configured to include the following procedures.

First, as described in the embodiment described above, the method includes an absorbent video data acquisition step of putting a predetermined absorbent material into water and acquiring video data of the absorbent material for a predetermined period of time.

Next, the method includes a frame image data acquisition step of acquiring frame image data by separating the video data into each frame image data, and a frame image classification step of classifying the frame image by inputting the acquired frame image data into an artificial neural network model subjected to machine learning in the manner described above.

Further, the method includes an absorbing speed calculation step of extracting an absorption end frame and an absorption start frame from the classified frame images and calculating an absorbing speed using the absorption end frame and the absorption start frame, and the absorbing speed can be calculated using (Equation 1) or (Equation 2) described above.

(Example 1)

According to the method for calculating the absorbing speed according to the present invention, a method of measuring the absorbing speed of Samples 1 to 16 is as follows.

① Training of neural network model

After a 100 mL beaker is filled with 50 mL of 0.9 wt% saline water, and while the saline water is rotated through magnetic stirring at 600 rpm, video data in which the entire process of the saline water being absorbed and hardened when 2 g of super absorbent polymer (absorbent material) is added was photographed was acquired. Video data was obtained for 16 types of super absorbent polymer samples.
Thereafter, the frames of the video data were separated to generate frame images, and the generated frame images were divided into two groups before hardening and after hardening, and labeling was conducted to secure training data.
Next, the CNN was applied as an image classification algorithm and the neural network model was trained using the labeled training data.

(2) Calculation of absorbing speed for sample (absorbent material)

For each of super absorbent polymer samples 1 to 16, after a 100 mL beaker is filled with 50 mL of 0.9 wt% saline water, and while the saline water is rotated through magnetic stirring at 600 rpm, video data, in which the entire process of the saline water being absorbed and hardened when 2 g of super absorbent polymer (absorbent material) is added was photographed, was acquired and separated into frame images.
For each sample, frame images were sequentially input into the trained neural network model to extract the frame number of the absorption start image and the frame number of the absorption end image, and the absorbing speed for each sample was calculated by performing arithmetic operation according to (Equation 2) described above.
The calculated absorbing speed values for samples 1 to 16 are shown in Table 1 below.

(Comparative example 1)

In the comparative example, as in the example described above, it was conducted for each of the superabsorbent resin samples 1 to 16, a 100 ml beaker was filled with 0.9 wt% saline water of 50 mL, and then 2 g of the samples 1 to 16 was added while the water was rotating through magnetic stirring at 600 rpm.
However, in the comparative example, the researcher directly measured the time using a timer during a process of water being absorbed and hardened. The timer was started when Samples 1 to 16 were added to the beaker being stirred, and the timer was terminated in a state where water was absorbed and hardened so that stirring could no longer be performed, and the absorbing speed was measured using the time measured on the timer.
Table 1 below shows the difference from the absorbing speed measurements according to the examples. The unit of measurement values in each Example and Comparative Example is seconds.

[Table 1]

| Sample | Example | Comparative example | Difference(s) |
| --- | --- | --- | --- |
| Sample 1 | 29.00 | 28.70 | 0.30 |
| Sample 2 | 16.85 | 16.55 | 0.30 |
| Sample 3 | 24.39 | 24.19 | 0.20 |
| Sample 4 | 31.87 | 31.13 | 0.74 |
| Sample 5 | 40.11 | 40.01 | 0.10 |
| Sample 6 | 88.62 | 88.15 | 0.47 |
| Sample 7 | 16.82 | 16.42 | 0.40 |
| Sample 8 | 16.85 | 16.32 | 0.53 |

(continued)

| Sample | Example | Comparative example | Difference(s) |
|---|---|---|---|
| Sample 9 | 23.96 | 23.36 | 0.60 |
| Sample 10 | 25.06 | 24.52 | 0.54 |
| Sample 11 | 32.47 | 32.33 | 0.14 |
| Sample 12 | 31.16 | 30.76 | 0.40 |
| Sample 13 | 41.04 | 40.67 | 0.37 |
| Sample 14 | 31.48 | 31.10 | 0.33 |
| Sample 15 | 85.55 | 85.39 | 0.16 |
| Sample 16 | 90.16 | 85.59 | 0.57 |
| Average | | | 0.38 |

As can be seen through the above examples and comparative example, the absorbing speed measured according to the present invention shows an average difference of 0.38s compared to the absorbing speed of the absorbent material conventionally measured manually using a timer, which shows that the method according to the present invention ensures sufficient accuracy, considering that the conventional method may have errors in operation depending on the researcher.

In addition, it shows that, according to the method for the present invention, there is an effect of automating the process of calculating the absorbing speed of the absorbent material and an effect of accurately calculating the absorbing speed for various samples in a standardized manner.

(Example 2/Comparative example 2)

In Example 2, Sample 1 in Example 1 above was measured 10 times by respectively using the method according to the present invention and the conventional manual measurement method. The table below shows the results measured by respective methods.

[Table 2]

| Number of measurements | Example | Comparative example |
|---|---|---|
| 1 | 28.8 | 29.5 |
| 2 | 29.0 | 29.5 |
| 3 | 29.0 | 30.3 |
| 4 | 29.1 | 28.3 |
| 5 | 29.1 | 27.0 |
| 6 | 29.0 | 29.2 |
| 7 | 29.1 | 28.1 |
| 8 | 28.9 | 27.9 |
| 9 | 29.1 | 29.7 |
| 10 | 28.9 | 27.6 |
| Average | 29.0 | 28.7 |
| Standard deviation | 0.1 | 1.1 |
| (Maximum value - Minimum value) | 0.3 | 3.3 |

As shown in Table 2 above, considering that the difference between the maximum and minimum values of the method according to the present invention is much smaller and the standard deviation is smaller than those of the conventional method, it shows that the method according to the present invention is superior in terms of repetition accuracy.

The followings are the signs and names of the elements used in the drawings and description of the present invention.

10 Absorption video data acquisition unit
20 Frame image data acquisition unit
30 Absorption speed arithmetic unit
31 Image determination unit (artificial neural network model)
32 Absorption progress determination unit
33 Absorbing speed arithmetic unit

**Claims**

1. A method for generating an artificial neural network model, comprising:

   a step of preparing training data consisting of image data of a predetermined absorbent material and classification data labeled by dividing a corresponding image into whether it is an absorption-in-progress image or an absorption-completion image;
   a step of constructing an artificial neural network that receives predetermined image data and classifies an input image with a predetermined label; and
   a machine learning step of training the artificial neural network by inputting the training data into the artificial neural network and updating parameters constituting the artificial neural network.

2. The method of claim 1, wherein
   the image data of the absorbent material is each frame image data acquired through

   a video data acquisition step of acquiring absorption video data for a plurality of absorbent materials, and
   a frame image data acquisition step of acquiring each frame image data constituting the video data.

3. The method of claim 2, wherein
   the absorption video data is video data in which a process of water being absorbed and hardened when a predetermined amount of the absorbent material is added while putting a predetermined amount of water in a container and stirring the water.

4. A method for calculating an absorbing speed of an absorbent material, comprising:

   an absorbent material video data acquisition step of putting an absorbent material and acquiring video data of the absorbent material for a predetermined period of time;
   a frame image data acquisition step of acquiring frame image data by separating the video data into each frame image data;
   a frame image classification step of classifying the frame image by inputting the frame image data into an artificial neural network model; and
   an absorbing speed calculation step of extracting an absorption end frame and an absorption start frame from the classified frame images and calculating an absorbing speed using the absorption end frame and the absorption start frame.

5. The method of claim 4, wherein
   the artificial neural network model is
   an artificial neural network model generated according to the method for generating the artificial neural network model according to any one of claims 1 to 3.

6. The method of claim 4, wherein
   in the absorbing speed calculation step, the absorbing speed is calculated by Equation 1 below, absorbing speed = (absorption end frame number - absorption start frame number)/fps of video.

7. A system for calculating an absorbing speed of an absorbent material, comprising:

   a video data acquisition unit that acquires absorption video data of the absorbent material;
   a frame image data acquisition unit that acquires frame image data by separating the absorption video data into each frame image data constituting video data; and
   an absorbing speed arithmetic unit that calculates an absorbing speed of the absorbent material by calculating an absorption start time and an absorption completion time from the frame image data.

8. The system of claim 8, further comprising:

   a frame image determination unit that receives each frame image data acquired by the frame image data acquisition unit in frame order and distinguishes and determines whether it is an absorption-in-progress image in which the absorbent material is absorbing water, or an absorption-completion image in which water absorption has been completed, wherein
   the absorption speed arithmetic unit calculates an absorption start time point from a frame number, that is start frame number of an image that the frame image determination unit first determines to be an absorption-in-progress image, and calculates an absorption completion time point from the frame number of an image that the frame image determination unit first determines to be an absorption-completion image.

9. The system of claim 8, wherein
   the absorbing speed is calculated by Equation 1 below,

   Equation 1 absorbing speed = (absorption end frame number - absorption start frame number)/fps of video.

   Equation 1

10. The system of claim 7, wherein
    the frame image determination unit is configured to include
    an artificial neural network unit trained in advance to receive each input frame image data, distinguish and determine the input frame image data as an absorption-in-progress image or an absorption-completion image, and output the determination result.

11. The system of claim 10, wherein
    the artificial neural network unit
    receives sample frame image data obtained by separating the absorption sample image data of multiple sample absorbent materials into each sample frame image data and data labeled as being in a state in which water is being absorbed and in a state in which water absorption has been completed, and is trained so as to match the labeled data to each sample frame image data.

FIG. 1

```
┌─────────────────┐                    ┌──────────────────────────────┐
│                 │                    │              30              │
│       10        │                    │   ┌──────────────────────┐   │
│                 │                    │   │          31          │   │
└─────────────────┘                    │   └──────────────────────┘   │
         │                             │              │               │
  ABSOBENT                             │           IMAGE              │
  MATERIAL                             │           SCORE              │
  ABSORPTION                           │              │               │
  VIDEO DATA                           │              ▼               │
         │                             │   ┌──────────────────────┐   │
         ▼                             │   │          32          │   │
┌─────────────────┐   FRAME IMAGE      │   └──────────────────────┘   │
│       20        │─────DATA──────────▶│              │               │
└─────────────────┘                    │        ABSORPTION            │
                                       │          START/              │
                                       │        ABSORPTION            │
                                       │        END TIME              │
                                       │          POINT               │  ABSORBING
                                       │              │               │   SPEED
                                       │              ▼               │
                                       │   ┌──────────────────────┐   │───────▶
                                       │   │          33          │   │
                                       │   └──────────────────────┘   │
                                       └──────────────────────────────┘
```

FIG. 2

| ABSORPTION<br>-IN-PROGRESS | ABSORPTION<br>-IN-PROGRESS | ABSORPTION<br>-IN-PROGRESS | ABSORPTION<br>-IN-PROGRESS | ABSORPTION<br>-COMPLETION |
|---|---|---|---|---|

| ABSORPTION<br>-IN-PROGRESS | ABSORPTION<br>-IN-PROGRESS | ABSORPTION<br>-IN-PROGRESS | ABSORPTION<br>-IN-PROGRESS | ABSORPTION<br>-COMPLETION |
|---|---|---|---|---|

| ABSORPTION<br>-IN-PROGRESS | ABSORPTION<br>-IN-PROGRESS | ABSORPTION<br>-IN-PROGRESS | ABSORPTION<br>-COMPLETION | ABSORPTION<br>-COMPLETION |
|---|---|---|---|---|

FIG. 3

FIG. 4

SAMPLE 10     vortex : 25.06s

SAMPLE 16     vortex : 90.16s

| INTERNATIONAL SEARCH REPORT | International application No. |
|---|---|
| | **PCT/KR2023/016554** |

**A. CLASSIFICATION OF SUBJECT MATTER**

**G06V 10/774**(2022.01)i; **G06V 10/764**(2022.01)i; **G06V 10/82**(2022.01)i; **G06V 20/40**(2022.01)i; **G06N 3/09**(2023.01)i; **G06N 3/0475**(2023.01)i; **G01N 33/44**(2006.01)i

According to International Patent Classification (IPC) or to both national classification and IPC

**B. FIELDS SEARCHED**

Minimum documentation searched (classification system followed by classification symbols)

G06V 10/774(2022.01); B02C 23/08(2006.01); C08J 3/24(2006.01); G01J 5/48(2006.01); G06K 9/00(2006.01); G06T 7/00(2006.01); G06T 7/30(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 흡수재(absorbent material), 이미지(image), 라벨링(labeling), 인공신경망(artificial neural network), 흡수속도(absorbing speed)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0146781 A (BEIJING BAIDU NETCOM SCIENCE AND TECHNOLOGY CO., LTD.) 06 December 2021 (2021-12-06)<br>See paragraphs [0038]-[0040], claim 1 and figures 2-5. | 1-11 |
| A | KR 10-0139392 B1 (KOREA INSTITUTE OF SCIENCE AND TECHNOLOGY) 01 July 1998 (1998-07-01)<br>See paragraph [0016] and figures 1-5c. | 1-11 |
| A | KR 10-2021-0117179 A (FRAUNHOFER-GESELLSCHAFT ZUR FÖRDERUNG DER ANGEWANDTEN FORSCHUNG E. V.) 28 September 2021 (2021-09-28)<br>See claim 1 and figures 1-3. | 1-11 |
| A | JP 2022-135498 A (CENTRAL JAPAN RAILWAY COMPANY) 15 September 2022 (2022-09-15)<br>See claims 1-2 and figures 1-2. | 1-11 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 February 2024** | **02 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/016554** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0077722 A (LG CHEM, LTD.) 09 June 2022 (2022-06-09)<br>See claims 1 and 10 and figure 1. | 1-11 |

Form PCT/ISA/210 (second sheet) (July 2022)

**INTERNATIONAL SEARCH REPORT**
Information on patent family members

International application No.

**PCT/KR2023/016554**

| Patent document cited in search report | | | Publication date (day/month/year) | Patent family member(s) | | | Publication date (day/month/year) |
|---|---|---|---|---|---|---|---|
| KR | 10-2021-0146781 | A | 06 December 2021 | CN | 111626202 | A | 04 September 2020 |
| | | | | CN | 111626202 | B | 29 August 2023 |
| | | | | EP | 3916630 | A1 | 01 December 2021 |
| | | | | EP | 3916630 | A4 | 01 December 2021 |
| | | | | JP | 2021-190095 | A | 13 December 2021 |
| | | | | JP | 7317879 | B2 | 31 July 2023 |
| | | | | US | 11657612 | B2 | 23 May 2023 |
| | | | | US | 2021-0374415 | A1 | 02 December 2021 |
| KR | 10-0139392 | B1 | 01 July 1998 | KR | 10-1996-0008304 | A | 22 March 1996 |
| KR | 10-2021-0117179 | A | 28 September 2021 | CN | 113390794 | A | 14 September 2021 |
| | | | | JP | 2021-148790 | A | 27 September 2021 |
| | | | | JP | 2023-144057 | A | 06 October 2023 |
| | | | | US | 11680895 | B2 | 20 June 2023 |
| | | | | US | 2021-0285867 | A1 | 16 September 2021 |
| JP | 2022-135498 | A | 15 September 2022 | None | | | |
| KR | 10-2022-0077722 | A | 09 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2020051997 A